# EUROPÄISCHE PATENTSCHRIFT

(11) **EP 2 569 209 B1**
(45) Veröffentlichungstag und Bekanntmachung des Hinweises auf die Patenterteilung: **14.09.2016**
(21) Anmeldenummer: 11723307.2
(22) Anmeldetag: 05.05.2011
(51) Int. Cl.: B62D 21/09, B62D 29/04, B62D 29/00, B29C 44/18

(54) **STRUKTURBAUTEIL AUS ZWEI EBENEN ÜBER STEGEN VERBUNDEN MIT EINEM STRUKTURMATERIAL INZWISCHEN**
STRUCTURE ELEMENT MADE OF TWO PLANAR SURFACES LINKED TO EACH OTHER BY WEBS AND WITH A STRUCTURAL MATERIAL IN BEWTEEN
ELEMENT D'UNE STRUCTURE FAIT DE DEUX ÉLÉMENTS PLANES RELIÉS ENTRE-EUX ET PRÉSENTANT UNE MATÉRIAU DE REMPLISSAGE ENTRE EUX DEUX

(30) Priorität: 12.05.2010 DE 102010028943
(43) Veröffentlichungstag der Anmeldung: 20.03.2013
(73) Patentinhaber: Henkel AG & Co. KGaA, 40589 Düsseldorf (DE)
(72) Erfinder: BECKER, Jochen, 74918 Angelbachtal (DE); KOCHERT, Stefan, 68799 Reilingen (DE); AMIOT, Aurelie, F-93200 Saint-Denis (FR)
(86) Internationale Anmeldenummer: PCT/EP2011/057190
(87) Internationale Veröffentlichungsnummer: WO 2011/141346

(56) Entgegenhaltungen:
- EP-A1- 1 609 577
- EP-A2- 1 435 320
- GB-A- 2 307 973
- US-A- 5 288 538

## Beschreibung

Die Erfindung betrifft ein Strukturbauteil aufweisend einen Träger aus zumindest zwei Trägerebenen sowie ein Strukturmaterial. Derartige Strukturbauteile kommen insbesondere im Fahrzeug-, Maschinen- und/oder Anlagenbau zum Einsatz und können beispielsweise zur Verstärkung einer einen Hohlraum umschließenden Baugruppe in selbigen Hohlraum eingesetzt werden.

Einsatzgebiete eines derartigen Strukturbauteils finden sich demnach insbesondere im Fahrzeugbereich. Dabei kann die Baugruppe, in der ein derartiges Strukturbauteil eingesetzt wird, beispielsweise ein Schweller, eine A-, B-, C- Säule, ein Querlenker, ein Achsschenkel oder ein anderes zumindest bereichsweise einen Hohlraum umschließendes oder rinnen- oder schalenförmiges Bauteil sein, welches mittels des Strukturbauteils und eines Strukturmaterials insbesondere verstärkt wird.

Zudem eignet sich der Einsatz derartiger Strukturbauteile in Innen- oder Hohlräumen von strukturellen Bauteilen von beispielsweise Kraftfahrzeugen, zur Abdichtung, insbesondere zur akustischen Abdichtung. Insbesondere moderne Fahrzeugkonzepte und Fahrzeugkonstruktionen weisen eine Vielzahl von Hohlräumen auf, die abgedichtet werden müssen, um den Eintritt von Feuchtigkeit und Verschmutzungen zu verhindern, da diese zur Korrosion an den entsprechenden Karosserieteilen von innen heraus führen kann. Dies trifft insbesondere auch auf moderne selbsttragende Karosseriekonstruktionen zu, bei denen Rahmenkonstruktion oder auch so genannte "space frames" eingesetzt werden. Derartige Konstruktionen weisen systembedingt eine Reihe von Hohlräumen auf, die gegen das Eindringen von Feuchtigkeit und Verschmutzungen abgedichtet werden müssen. Da diese Hohlräume außerdem Luftschall in Form von unangenehmen Fahrzeuglauf- und Windgeräuschen weiterleiten, dienen derartige Abdichtmaßnahmen auch zur Minderung der Geräusche und damit zur Erhöhung des Fahrkomforts im Fahrzeug. Bei herkömmlicher Bauweise werden diese Hohlräume enthaltenden Rahmen- und Karosserieteile aus halbschaligen Bauteilen vorgefertigt, die zu einem späteren Zeitpunkt durch Schweißen, Bördeln und/oder Kleben zu dem geschlossenen Hohlprofil gefügt werden. Bei derartiger Bauweise ist der Hohlraum im frühen Aufbauzustand einer Fahrzeugkarosserie also leicht zugänglich, so dass abdichtende und akustisch dämpfende auch als Schottteile bekannte Strukturbauteile in dieser frühen Phase des Rohbaus durch mechanisches Einhängen, durch Einstecken in entsprechende Haltevorrichtungen, Bohrungen oder durch Anschweißen fixiert werden können.

Diese bekannten Strukturbauteile, die eine abdichtende und/oder dämpfende, also insbesondere eine akustische Wirkung in derartigen Hohlräumen bewirken, werden im angelsächsischen Sprachgebrauch auch "pillar filler" oder "baffles" oder auch "acoustic baffles" genannt. Sie bestehen in der Regel entweder vollständig aus thermisch expandierbaren Formkörpern oder sehr häufig aus Formkörpern, die einen Träger und in ihrem Peripheriebereich expandierbare polymere Bindemittel enthalten. Diese Strukturbauteile werden dann im Rohbau durch Einhängen, Einclipsen oder Verschrauben an den zu diesem Zeitpunkt noch offenen Baustrukturen befestigt. Nach dem Schließen der Baustrukturen im Rohbau und den weiteren Vorbehandlungen der Karosserie wird dann die Prozesswärme der Öfen zur Aushärtung der kathodischen Tauchlackierung (KTL bzw. E-coat) ausgenutzt, um beispielsweise eine Expansion eines expandierbaren Teils des Strukturbauteils auszulösen um somit den Querschnitt des Hohlraums abzudichten.

Derartige Strukturbauteile sind im Stand der Technik lange bekannt. Beispielsweise beschreibt die Die WO 01/83206 ein Schottteil zur Verwendung in einem Hohlraum eines strukturellen Bauteils einer Fahrzeugkarosse zur Dämpfung von akustischen Schallwellen und zur Versteifung des Bauteils quer zur Längsachse des strukturellen Bauteils. Das Schottteil besteht dabei aus einem Kunststoffträger mit einem Randbereich. In dem Randbereich ist ein kontinuierliches Band eines expandierbaren Materials angeordnet. Problematisch bei dergleichen Schottteilen ist die Herstellung des Trägers mit dem Randbereich für das Schaummaterial. Hier sind Hinterschnitte vorgesehen, um das Schaummaterial zu halten, die einen hohen Fertigungsaufwand erfordern. Zudem kann es zu einer mangelnden Dämpfung kommen, da eine Absorption insbesondere von akustische Schallwellen, welche sich in Richtung Längsachse des strukturellen Bauteils bewegen, durch den Kunststoffträger nicht gewährleistet werden kann.

Aus der WO 03/004314 A1 ist eine Schalldämmungsvorrichtung bekannt, die in ein röhrenförmiges Teil, insbesondere ein Fahrzeugkarosserieteil eingesetzt werden kann. Diese Schalldämmungsvorrichtung weist einen flächigen aus einem Kunststoffmaterial bestehenden Einsatz und einen Strang aus einer durch Wärme ausdehnbaren Zusammensetzung zur Bildung eines Schaums auf, wobei dieser Strang an den Umfang des Einsatzes angesetzt ist. Die Vorrichtung umfasst ferner Mittel zum Befestigen der Schalldämmungsvorrichtung an dem röhrenförmigen Teil vor dem Ausdehnen der Zusammensetzung. Auch hier ist zur Herstellung des Unterteilungseinsatzes ein hoher Fertigungsaufwand zu betreiben, da zur Aufnahme des Stranges an vielen Stellen Hinterschnitte erforderlich sind. Auch kann sich ein Problem der mangelnden Dämpfung zeigen, da eine Absorption akustischer Schallwellen, welche sich in Richtung des flächigen Unterteilungseinsatzes bewegen, durch den selbigen nicht gewährleistet werden kann.

Die EP1362683 wiederum zeigt ein Schotteil bestehend aus zwei, über ein Scharnier miteinander verbundene Plattenelementen zwischen denen ein Schaummaterial vorgesehen ist. Nachteilig ist hier der zusätzliche Montageaufwand indem die beiden Plattenelemente um das Scharnier gegeneinander verschwenkt werden müssen, um ein einsatzbereites Schotteil bereitzustellen.

Ein Strukturbauteil gemäss dem Oberbegriff des Anspruch 1 ist in US5288538A offenbart. Aufgabe der Erfindung ist es daher, ein verbessertes Strukturbauteil bereitzustellen. Diese Aufgabe wird durch die Merkmale des Anspruchs 1 gelöst.

Die vorteilhaften Ausgestaltungen der Erfindung sind mit den Unteransprüchen angegeben. Grundgedanke der Erfindung ist der Einsatz eines Strukturbauteil, welches einen Träger bestehend aus zumindest zwei Trägerebenen aufweist, die derart beabstandet voneinander angeordnet sind, dass zwischen einer ersten Trägerebene und einer der ersten Trägerebene gegenüberliegenden zweiten Trägerebene ein Zwischenraum gebildet wird, wobei die Trägerebenen eine Vielzahl von miteinander verbundenen Flächenelementen aufweisen, die jeweils durch Freiräume zumindest bereichsweise voneinander getrennt sind, wobei die Flächenelemente der ersten Trägerebene über Stege mit Flächenelementen der zweiten Trägerebene derart verbunden sind, dass jeweils zwischen benachbarten Stegen Gänge gebildet werden und wobei im Zwischenraum zwischen den Trägerebenen zumindest bereichsweise ein Strukturmaterial vorgesehen ist, welches sich durch die Gänge zwischen den Stegen im Zwischenraum erstreckt und wobei das Strukturmaterial zumindest bereichsweise die äußere Oberfläche des Strukturbauteils bildet. Vorzugsweise kommt hierbei ein expandierbares Strukturmaterial zum Einsatz, beispielsweise um Hohlräume auszufüllen und/oder um eine Lagefixierung des Strukturbauteils zu ermöglichen

So kann insbesondere ein besonders festes und/oder verwindungssteifes Strukturbauteil bereitgestellt werden, da über die Stege, über die die Flächenelemente der ersten und der zweiten Trägerebene miteinander verbunden sind, auf das Strukturbauteil einwirkende Kräfte übertragen werden können. Zudem kann eine besonders gute Dämpfung, Dämmung und/oder Verstärkung der Baugruppe, in dem ein derartiges Strukturbauteil zum Einsatz kommt, erreicht werden. Vielfach wird eine solche Funktion zum großen Teil durch das zum Einsatz kommende Strukturmaterial gewährleistet. Beispielsweise kann es bei einem Einsatz eines erfindungsgemäßen Strukturbauteils als Schottteil von Vorteil sein, eine durchgängige Schicht an Strukturmaterial über den gesamten abzuschottenden Querschnitt einzusetzen. Auch bei einer Verstärkung von beispielsweise einem durch zwei Blechbereiche zumindest teilweise begrenzten Raum kann sich eine durchgängige Schicht eines solchen Materials zwischen den Blechbereichen als vorteilhaft erweisen, um eine verstärkende Wirkung zu erreichen. Insbesondere diese Vorteile können mit dem erfindungsgemäßen Strukturbauteil mittels der zwischen den Stegen vorgesehen Gänge erreicht werden. Zum einen ist es möglich, in diesem Bereich das Strukturmaterial direkt vorzusehen, welches ferner an vorzugsweise den Seiten des Strukturbauteils, an dem beispielsweise ein den abzuschottenden Querschnitt begrenzenden Wandbereich bzw. ein besagter Blechbereich, vorgesehen ist, zumindest bereichsweise die äußere Oberfläche des Strukturbauteils bildet. So kann insbesondere gewährleistet werden, dass das Strukturmaterial beispielsweise mit den zu verstärkenden Blechbereichen in Kontakt kommt, diese zudem gegebenenfalls dämpft und/oder den Hohlraum zuverlässig dämmt. Einen weiteren Vorteil stellt der Einsatz eines expandierbaren Strukturmaterials dar. Dieser kann sich bei der Expansion durch die besagten Gänge erstrecken und insbesondere in den Bereichen, in denen das Strukturmaterial die äußere Oberfläche des Strukturbauteils bildet, mit zu dämmenden, zu verstärkenden oder zu dämpfenden Bauteilen in Kontakt kommen, so dass eine besonders gute Dämpf-, Dämm,- und/oder Verstärkungswirkung erzielt werden kann.

Durch die Anordnung des Strukturmaterials im Zwischenraum zwischen den Trägerebenen kann eine besonders gute Lagefixierung des Strukturbauteils bereitgestellt werden. Durch die Flächenelemente der ersten Trägerebene auf der einen Seite des Strukturmaterials sowie durch die Flächenelemente der zweiten Trägerebene auf der gegenüberliegenden Seite, kann das Strukturmaterial am vorgesehenen Platz gehalten werden. Insbesondere die im Kraftfahrzeugbau zur Anwendung kommenden expandierbaren Strukturmaterialien neigen bei Erwärmung zum Kriechen, so dass sich diese von dem vorgesehenen Platz entfernen könnten, was möglicherweise negative Folgen im Hinblick auf eine gewünschte Dämmung, Dämpfung und/oder Verstärkung haben könnte. Durch den Einsatz der besagten Haltemöglichkeit des Strukturmaterials kann insbesondere dieses Problem behoben werden. Selbst bei einem Einbau des Strukturbauteils derart, dass beispielsweise eine Trägerebene des Strukturbauteils im Wesentlichen parallel zur Kriechrichtung des Strukturbauteils gerichtet verbaut ist, kann eine sichere Lagefixierung bereitgestellt werden. Insbesondere die im Zwischenraum vorgesehenen Stege können bei einer derartigen oder ähnlichen Anordnung des Strukturbauteils das Strukturmaterial in seiner Lage sichern. Zudem kann bei geeigneter Anordnung des Strukturmaterials über die Seiten- oder Kantenflächen der Flächenelemente eine Lagefixierung des Strukturmaterials bereitgestellt werden.

Bevorzugt bestehen die beiden Trägerebenen des Trägers jeweils aus einer Vielzahl von Flächenelementen, wobei vorzugsweise eine Vielzahl von Stegen vorgesehen ist, um die ersten Flächenelemente der ersten Trägerebene mit den zweiten Flächenelementen der gegenüberliegenden zweiten Trägerebene zu verbinden. In der Regel werden dergleiche Träger aus einem Kunststoffmaterial, beispielsweise in einem Spritzgussverfahren hergestellt. Hier ist es besonders von Vorteil, einen Träger einzusetzen, dessen Form keine Hinterschnitte aufweist, um eine kostengünstige Herstellung zu ermöglichen.

In einer besonders bevorzugten Ausführungsform sind die Flächenelemente der beiden Trägerebenen demnach derart zueinander angeordnet, dass keine der ersten Flächenelemente die zweiten Flächenelemente in einer Entformungsrichtung des Trägers überragt oder abdeckt und wobei die die ersten und zweiten Flächenelemente verbindenden Stege derart angeordnet sind, dass kein Hinterschnitt gebildet wird. Somit kann ein derartiger Träger beispielsweise im Spritzgussverfahren hergestellt werden, wobei gespritzte oder gegossene Teil durch das alleinige Öffnen der Form in der so genannten Trennebene entformt werden kann. So kann ein derartiger Träger aus einem Kunststoffmaterial hergestellt werden, wobei ein kostengünstig herstellbares Spritzgusswerkzeug zum Einsatz kommen kann. Insbesondere kann auf den Einsatz von teuren Schiebern, die dazu dienen, Partien zu entformen, die nicht in normaler Entformungsrichtung entformt werden können, verzichtet werden.

Hierbei hat sich als besonders vorteilhaft erwiesen, Stege einzusetzen, die mit dem oder den Flächenelementen in einem Winkel von über 90° verbunden sind. Dieser Winkel liegt hierbei vorzugsweise zwischen der Ebene, in der sich das zu verbindende Flächenelement befindet und dem mit dem Flächenelement verbundenen Steg, wobei der Winkel vorzugsweise zwischen dem Steg und der Seite des Flächenelementes anliegt, die direkt gegenüberliegend zur jeweils anderen Trägerebene vorgesehen ist. Selbstverständlich können Stege beliebiger Bauform und Ausgestaltung zum Einsatz kommen. Einerseits können beispielsweise gerade Stege, insbesondere zylindrischer oder quaderförmiger gestalt eingesetzt werden, es können jedoch auch gebogene Stege oder Winkel mit einem Wellen- oder Zackenprofil zum Einsatz kommen. Im letzteren Fall ist der besagte Winkel vorzugsweise zwischen der besagten Seite des Flächenelementes und der Gerade zu ermitteln, welche den Kontaktpunkt oder mittleren Kontaktpunkt mit diesem Flächenelement und den Kontaktpunkt oder mittleren Flächenelement des zu verbindenden zweiten Flächenelements der gegenüberliegenden Trägerebene ergibt.

Ein weiterer Vorteil ist die Ausbildung der Flächenelemente derart, dass zumindest einige der Flächenelemente rahmenförmig ausgebildet sind und Ausnehmungen aufweisen. Dies ermöglicht insbesondere eine Kommunikation des Strukturmaterials aus dem Zwischenraum durch die Ausnehmungen in die Bereiche um das Strukturbauteil. Dies ist insbesondere beim Einsatz von expandierbaren Strukturmaterialien von Vorteil, welche durch die Ausnehmungen expandieren können. Zudem kann Material für den Träger eingespart werden.

Ein weiterer Vorteil ist die Ausbildung des Trägers derart, dass zumindest eine Seite des Strukturbauteils durch eine Trägerebene gebildet wird, wobei der Anteil der äußeren Oberfläche, der durch die Flächenelemente dieser Trägerebene gebildet wird, kleiner als 50% der Oberfläche dieser Trägerebene ist. Mit dem Einsatz eines solchen Trägers kann das in dem Zwischenraum des Strukturbauteils vorgesehene Strukturmaterial beispielsweise mehr als 50% der äußeren Oberfläche des Strukturbauteils einnehmen. Zudem kann bei einem Einsatz eines expandierbaren Strukturmaterials eine große Fläche in Form von Freiräumen zwischen den Flächenelementen dieser einen Seite bereitgestellt werden, durch die das Strukturmaterial expandieren kann. So kann die Dämpfung, Dämmung und/oder Verstärkung einer Baugruppe erhöht werden. Bevorzugt sind beide Trägerebenen mit derartigen Flächenelementen ausgestattet, die weniger als 50% der Oberfläche der jeweiligen Trägerebene bedecken.

Ein weiterer Vorteil ist die Ausgestaltung des Trägers derart, dass jeweils ein Flächenelement der einen Trägerebene in Projektionsrichtung gegenüberliegend von einem Freiraum der jeweils anderen Trägerebene angeordnet ist. Die Projektionsrichtung kann dabei beispielsweise eine Draufsicht im Wesentlichen orthogonal hinsichtlich der Oberfläche einer Trägerebene sein, was gleichzeitig die Entformungsrichtung sein kann. Durch eine derartige Anordnung der ersten und zweiten Flächenelemente kann ein besonders sicherer Halt des Strukturmaterials ermöglicht werden. Wie bereits oberhalb erwähnt kommen vielfach expandierbare Strukturmaterialien zum Einsatz, die bei der Erwärmung vor der Expansion zum Kriechen oder Fließen neigen und so Absacken können, so dass eine zuverlässige Dämmung, Dämpfung und/oder Verstärkung nicht mehr möglich würde. Durch die oben beschriebene versetzte Anordnung der ersten und zweiten Flächenelemente kann beispielsweise durch erste, unterhalb des Strukturmaterials angeordnete Flächenelemente eine besonders gute Auflagemöglichkeit für das Strukturmaterial bereitgestellt werden. Durch die zweiten, oberhalb des Strukturmaterials angeordneten Flächenelemente, die gegenüberliegend zu den Freiräumen der ersten Trägerebene zwischen den ersten Flächenelementen vorgesehen sind, kann eine zusätzliche Haltemöglichkeit für das Strukturmaterial beispielsweise durch die Adhäsion des Strukturmaterials an der dem Zwischenraum zugewandten Seite der zweiten Flächenelemente bereitgestellt werden.

Besonders vorteilhaft, insbesondere im Hinblick auf eine einfache und kostengünstige Herstellung des Trägers, ist dabei die Ausgestaltung des Trägers derart, dass die Flächengröße eines Flächenelementes der einen Trägerebene kleiner ist, als die Flächengröße des gegenüberliegenden Freiraums der jeweils gegenüberliegenden Trägerebene. So kann gewährleistet werden, dass kein erstes Flächenelement ein zweites Flächenelement in Projektionsrichtung abdeckt oder überlappt. Die Projektionsrichtung kann auch hier beispielsweise eine Draufsicht im Wesentlichen orthogonal hinsichtlich der Oberfläche einer Trägerebene sein, was gleichzeitig die Entformungsrichtung sein kann. Derartige gestaltete Träger weisen insbesondere im Bereich der Flächenelemente keine Hinterschnitte auf, so dass ein kostengünstiges Herstellungswerkzeug herstellbar ist. Vorzugsweise kommen dabei die oben beschriebenen Stege zur Verbindung der ersten und zweiten Flächenelemente zum Einsatz, die mit dem oder den Flächenelementen in einem Winkel von über 90° verbunden sind.

Besonders bevorzugt ist hierbei eine Ausgestaltung des Trägers derart, dass ein Flächenelement der einen Trägerebene eine Fläche, vorzugsweise die Fläche in besagter Projektionsrichtung, in einem Größenbereich von 10% - 99% der Fläche des entsprechenden Freiraums der gegenüberliegenden Trägerebene aufweist. Mit kleineren Flächen kann ein sicherer Halt des Strukturmaterials nicht gewährleistet werden. Zudem hat sich herausgestellt, dass das eine Flächenelement nur geringfügig kleiner sein muss, als der jeweils gegenüberliegende Freiraum, beispielsweise um eine einfache Entformung nach einer Spritzgussherstellung und somit kostengünstige Herstellung zu ermöglichen.

Ein weiterer Vorteil ist dabei die Gestaltung des Trägers derart, dass die zu einer Trägerebene, vorzugsweise in der besagten Projektionsrichtung, gerichtete Summe der Oberflächen der einzelnen Flächenelemente der ersten und der zweiten Trägerebene kleiner als 99% als die Gesamtoberfläche dieser einen Trägerebene ist. Somit kann sichergestellt werden, dass beispielsweise in besagter Projektionsrichtung Zwischenraumbereiche vorgesehen sind, bei denen das Strukturmaterial von der Oberfläche der ersten Trägerebene bis zur Oberfläche der zweiten Trägerebene durchgängig vorgesehen ist und dort die äußere Oberfläche des Strukturbauteils darstellt, um beispielsweise eine erhöhte Dämpfung, Dämmung und/oder Verstärkung zu ermöglichen. Zudem kann sichergestellt werden, dass die Flächenelemente beider Trägerebenen in besagter Projektionsrichtung, was auch die Entformungsrichtung sein kann, sich nicht gegenseitig überlappen oder überstehen, was die Herstellung des Trägers und somit des Strukturbauteils aus den oben genannten Gründen erleichtern kann.

Ein weiterer Vorteil ist die Ausgestaltung des Strukturbauteils derart, das die Oberfläche des Strukturbauteils zumindest teilweise durch die äußere Oberfläche der Flächenelemente und durch das in dem Zwischenraum vorgesehene Strukturmaterial gebildet wird. Bei einem Einsatz eines expandierbaren Strukturmaterials kann selbiges derart gewählt werden sowie die Oberflächenanteile beider Bereiche derart angepasst werden, dass das expandierte Strukturmaterial im verbauten Zustand des Strukturbauteils die äußere Oberfläche der Flächenelemente vollständig abdeckt.

Alternativ oder zusätzlich kann es von Vorteil sein, dass das Strukturmaterial die Flächenelemente zumindest einer Trägerebene vollständig einhüllt. Dies kann insbesondere bei einem expandierbaren Strukturmaterial von dann von Vorteil sein, wenn beispielsweise auf einer Seite des Strukturbauteils eine besonders starke Fixierung mit dem zu verbindenden Bauteil oder der zu verbindenden Baugruppe mittels des Strukturmaterials bereitgestellt werden soll.

So kann es ferner als vorteilhaft angesehen werden, wenn ein Träger mit zwei Trägerebenen zum Einsatz kommt, wobei die äußere Oberfläche des Strukturbauteils an der einen oder einer ersten Trägerebene durch die äußere Oberfläche der Flächenelemente und durch das in den Freiräumen vorgesehene Strukturmaterial gebildet wird und an einer anderen oder zweiten Trägerebene im Wesentlichen ausschließlich durch das Strukturmaterial. Alternativ kann es für andere Einsatzzwecke wiederum von Vorteil sein, den Träger und das Strukturmaterial derart auszubilden und vorzusehen, dass das Strukturmaterial die gesamte äußere Oberfläche des Strukturbauteils im Bereich der beiden Trägerebenen bildet und die Flächenelemente somit vollständig einhüllt.

Ein weiterer Vorteil ist die Ausgestaltung des Strukturbauteils derart, dass der Zwischenraum, welcher sich von der ersten Trägerebene zu der zweiten Trägerebene erstreckt, im Bereich zumindest eines Flächenelementes nur bereichsweise mit Strukturmaterial ausgefüllt ist. So kann beispielsweise Strukturmaterial eingespart werden. Insbesondere bei expandierbaren Strukturmaterialien ist eine derartige Ausgestaltung sinnvoll, da die einzubringende Menge an Strukturmaterial bei der Herstellung des Strukturbauteils reduziert werden kann. So kann beispielsweise die benötigte Zeit zur Herstellung eines Strukturbauteils verringert werden. Vorzugsweise ist dieser bereichsweise mit Strukturmaterial gefüllte Bereich derart gestaltet, dass ein topfförmiger Hohlbereich entsteht. In diesem Fall könnte der Boden des topfförmigen Hohlbereichs durch das Strukturmaterial gebildet werden, welches auf einer Fläche eines Flächenelementes vorgesehen ist, welche dem Zwischenraum zugewandt ist. Ferner würde der topfförmige Hohlraum aus einer Umfangswand aus Strukturmaterial gebildet, welche sich in Richtung der gegenüberliegenden Trägerebene erstrecken würde, wobei der Hohlraum an dem dem besagten Flächenelement gegenüberliegenden Freiraum offen gestaltet sein würde.

Ein weiterer Vorteil ist die im Wesentlichen parallele Anordnung der Trägerebenen zueinander. Alternativ können die Trägerebenen auch winklig zueinander angeordnet sein und beispielsweise an die Form des Bauteils oder der Baugruppe angepasst sein, in dem das Strukturbauteil zum Einsatz kommt. Auch kann das Strukturbauteil in einer Baugruppe zum Einsatz kommen, wobei zwei Flächenbereiche der Baugruppe nicht parallel zueinander verlaufen. Hier kann das Strukturbauteil jedoch derart gestaltet sein, dass die Trägerebenen parallel zu den gegenüberliegenden oder benachbarten Flächenbereichen der Baugruppe verlaufen und aufgrund dieser Anordnung jeweils winklig zu zueinander.

Ein weiterer Vorteil ist die Ausgestaltung des Trägers derart, dass zumindest eine Trägerebene zumindest bereichsweise eine Gitterstruktur aufweist. Darunter kann eine Form verstanden werden, bei der sich in einem regelmäßigen Muster Freiräume und Flächenelemente abwechseln. Dabei können sowohl die Freiräume, als auch die Flächenelemente einer Trägerebene unterschiedliche Formen aufweisen. Jedoch hat es sich als besonders vorteilhaft erwiesen, einen Träger einzusetzen, wobei zumindest eine Trägerebene eine Gitterstruktur mit einem regelmäßigen Muster mit wiederkehrenden Flächenelementformen, beispielsweise quadratische Formen, also insbesondere schachbrettförmige, rechteckige, dreieckige oder vieleckige Formen aufweist. Dabei können die Trägerelemente eine derartige Form aufweisen und die Freiräume regelmäßige hierzu korrespondierende Formen. Durch den Einsatz von regelmäßigen Trägerelementformen kann ein besonders wirtschaftliches Strukturbauteil hergestellt werden. Beispielsweise können große Matten oder Flächen des Strukturbauteils hergestellt werden, aus denen die benötigten Teile herausgestanzt oder geschnitten werden. Durch die regelmäßigen Flächenelementformen kann gewährleistet werden, dass alle diese Teile nahezu dieselben Eigenschaften, insbesondere hinsichtlich der Festigkeit und/oder nahezu dieselben Verstärkungs-, Dämmungs- und/oder Dämpfungseigenschaften aufweisen.

Ein weiterer Vorteil hierbei ist die Ausgestaltung des Trägers bestehend aus zwei Trägerebenen derart, dass beide Trägerebenen die gleiche Gitterstruktur aufweisen, wobei die Gitterstruktur der beiden Trägerebenen vorzugsweise derart versetzt zueinander vorgesehen sind, dass die Muster der Gitterstrukturen wechseln. Dies ist insbesondere im Hinblick auf eine oben beschriebene kostengünstige Herstellungsmöglichkeit durch den Verzicht auf Hinterschnitte vorteilhaft.

Der Träger kann in allen genannten Ausführungsformen vorzugsweise aus einem Kunststoffmaterial bestehen. Insbesondere können dabei bekannte Polyolefine wie PE oder PP, PVC (weich oder hart), ABS, PC (insbesondere transparent), Polyamide (insbesondere PA6, PA6.6, PA4.6), Kunststoffe mit Füllstoffen (insbesondere GF, GK, V0 Mineralstoffe), TPE, TPU, oder PS als Werkstoffe zum Einsatz kommen. Als besonders vorteilhaft hat sich als Werkstoff für den Träger der Einsatz eines Polyamids, insbesondere PA 6.6 erwiesen. Der Träger kann dabei zudem wiederum ein Verbundbauteil sein und insbesondere faserverstärkt ausgelegt werden. Hierbei hat sich der Einsatz eines Polyamids mit einem Anteil von bis zu 60% Glasfasern als vorteilhaft herausgestallt. Besonders bevorzugt ist der Glasfaseranteil im bereich zwischen 15% und 35%.

Bevorzugt kommt ein Träger mit einem hohen E-Modul zum Einsatz. Bevorzugt weist das Träger Bereiche unterschiedlicher Stärke auf. Dabei können Bereiche der Baugruppe, an dem beispielsweise besonders hohe Belastungen erwartet werden, mittels des Strukturbauteils und dem Träger mit einer großen Stärke verstärkt werden, an weniger belasteten Bereichen der Baugruppe kann die Stärke des Trägers geringer ausgeführt werden, insbesondere um Material einzusparen.

Ein weiterer Vorteil ist der Einsatz eines Trägers aus einem faserverstärktem Kunststoff. Durch den Einsatz eines Faser-Kunststoff-Verbunds als Werkstoff für den Träger kann eine hohe spezifische Steifigkeit und Festigkeit erreicht werden, so dass insbesondere ein geeignetes Strukturbauteil für Leichtbauanwendungen bereitgestellt werden kann. Als Verstärkungsfasern kommen insbesondere anorganische Verstärkungsfasern, wie beispielsweise Basaltfasern, Borfasern, Glasfasern, Keramikfasern oder auch Kielsäurefasern zum Einsatz. Denkbar sind auch metallische Verstärkungsfasern, wie beispielsweise Stahlfasern. Zudem kann sich der Einsatz von organischen Verstärkungsfasern, wie beispielsweise Aramidfasern, Kohlenstofffasern, Polyesterfasern, Nylonfasern oder Polyethylenfasern als sinnvoll erweisen. Denkbar ist auch der Einsatz von nachwachsenden Verstärkungsfasern, von Naturfasern, wie beispielsweise Flachsfasern, Hanffasern oder Sisalfasern.

Ein weiterer Vorteil ist der Einsatz eines Trägers aus Metall, wie beispielsweise Stahl, Aluminium, Magnesium oder auch einem Stahlgeflecht. Der Einsatz deines Strukturbauteils mit einem derartigen Träger eignet sich besonders für verstärkte Verbundbauteile, bei denen hohe Anforderungen an die Steifigkeit und Festigkeit gestellt werden. Um den Träger vor äußeren Einflüssen zu schützen, kann der Einsatz von beschichteten und/oder lackierten Metall von Vorteil sein.

Die Befestigung des Strukturbauteils an einem Bauteil oder einer Baugruppe kann zudem mittels Einkleben über das Strukturmaterial erfolgen. Ferner können zusätzlich oder alternativ Clipse oder Aufsteckfixierungen oder entsprechende Aufnahmen für derartige Verbindungsmittel oder korrespondierende Bauteile an dem Träger vorgesehen werden. Auch sind Verbindungsmittel aus einem metallischen Werkstoff wie beispielsweise Metallaschen denkbar, so dass das Strukturbauteil über ein Schweißverfahren mit einem Bauteil oder einer Baugruppe verbunden werden kann. Weitere denkbare Verbindungsmöglichkeiten von Strukturbauteil und Bauteil oder einer Baugruppe sind das Klemmen mittels angebrachten Klemmrippen oder-noppen.

Als in allen Ausführungsformen einsetzbares Strukturmaterial kann sich beispielsweise der Einsatz eines expandierbaren Materials als sinnvoll erwiesen, wie es in der internationalen Patentanmeldung WO/2009/036784 beschrieben wird. Für die das Material betreffenden Aspekte darf auf das genannte Dokument verwiesen werden, deren Offenbarungsgehalt insoweit die Offenbarung der vorliegenden Patentanmeldung ergänzt.

Alternativ kann sich auch der Einsatz eines Strukturmaterials als sinnvoll erwiesen, wie es in der Deutsche Patentanmeldung 102008057260 beschrieben wird. Für die das Material betreffenden Aspekte darf auf das genannte Dokument verwiesen werden, deren Offenbarungsgehalt insoweit die Offenbarung der vorliegenden Patentanmeldung ergänzt.

Die Aktivierung und Expansion eines expansionsfähigen Strukturmaterials kann vorzugsweise unter Ausnutzung der Prozesswärme eines KTL-Ofens zur Aushärtung der kathodischen Tauchlackierung beispielsweise einer Kraftfahrzeugskarosserie erfolgen. Selbstverständlich ist auch eine gesonderte Einwirkung von Wärme zur Expansion des expansionsfähigen Materials denkbar.

Ein weiterer Vorteil ist das Aufbringen des Strukturmaterials auf das Strukturbauteil durch ein Spritzgussverfahren. Dabei wird das vorzugsweise expandierbare Strukturmaterial insbesondere in den Zwischenraum des aus einem metallischen Werkstoff oder einem Kunststoffmaterial bestehenden Trägers während eines Spritzgussvorganges aufgespritzt. Vorzugsweise werden alle zum Einsatz kommenden Strukturmaterialien in einem Spritzgussvorgang ein- und/oder aufgebracht, um Zeit und Kosten zu sparen. Durch den Einsatz eines Spritzgussverfahrens zum Aufbringen der Strukturmaterialien können diese präzise auf die vorgesehenen Stellen des Strukturbauteils aufgebracht werden. Zudem ist die Dosierung der Menge an Strukturmaterial einfach, so dass nicht zu viel Material aufgebracht wird, was die Kosten erhöhen würde oder zu wenig Material. Alternativ kann das Strukturmaterial auf das Strukturbauteil auch mittels eines Pumpverfahrens, beispielsweise durch einen Roboter automatisiert aufgebracht werden.

Besonders vorteilhaft bei der Herstellung des Trägers aus einem Kunststoffmaterial hat sich die Herstellung des Strukturbauteils und Ausrüstung mit Strukturmaterialien mittels eines Verbindungsspritzgussverfahrens und/oder Biinjektionsspritzgussverfahrens erwiesen. Dabei kann in einem ersten Schritt der Träger selbst mit möglichen Aufnahmen für das Strukturmaterial und/oder Verbindungsmitteln zur Lagefixierung hinsichtlich der besagten Baugruppe und/oder gegebenenfalls weiteren Ausstattungsmerkmalen durch Injektion eines thermoplastischen Werkstoffes, insbesondere eines Polyamids in eine Spritzgussform hergestellt werden. Die beiden Hälften der Spritzgussform werden im Anschluss zur Entformung auseinander gezogen. In einem zweiten Arbeitsschritt kann dann in einer zweiten geeigneten Spritzgussform ein Strukturmaterial oder eine Vielzahl von Strukturmaterialien, insbesondere bestehend aus einem thermisch expansionsfähigen Material, aufgebracht werden. Durch eine derartige, vorzugsweise vollautomatisierte Herstellung eines erfindungsgemäßen Strukturbauteils mit Strukturmaterial kann ein genau auf die zu verstärkende Baugruppe ausgelegtes Strukturbauteil mit Strukturmaterial mit geringen Fertigungstoleranzen bereitgestellt werden.

Einige bevorzugte Ausführungsbeispiele der vorliegenden Erfindung sind mit den Figuren angegeben und werden folgend beschrieben. Dabei zeigen
Figur 1 eine perspektivische Teilansicht eines Trägers eines erfindungsgemäßen Strukturbauteils,
Figur 2 eine perspektivische Teilansicht eines erfindungsgemäßen Strukturbauteils mit dem Träger aus Figur 1,
Figur 3 eine perspektivische Teilansicht eines alternativen Strukturbauteils,
Figur 4 eine perspektivische Teilansicht eines alternativen Trägers eines erfindungsgemäßen Strukturbauteils,
Figur 5 eine geschnittene Teilansicht eines Strukturbauteils durch die Schnittlinie AA des Trägers aus Figur 4,
Figur 6 eine alternative geschnittene Teilansicht im Hinblick auf die Teilansicht aus Figur 5.
Figur 7 eine weitere alternative geschnittene Teilansicht eines Strukturbauteils,
Figur 8 eine geschnittene Seitenansicht einer einen Hohlraum begrenzenden Baugruppe mit einem eingelegten erfindungsgemäßen Strukturbauteils mit einem expandierbaren Strukturmaterial,
Figur 9 zeigt die Baugruppe aus Figur 8 mit expandiertem Strukturmaterial.

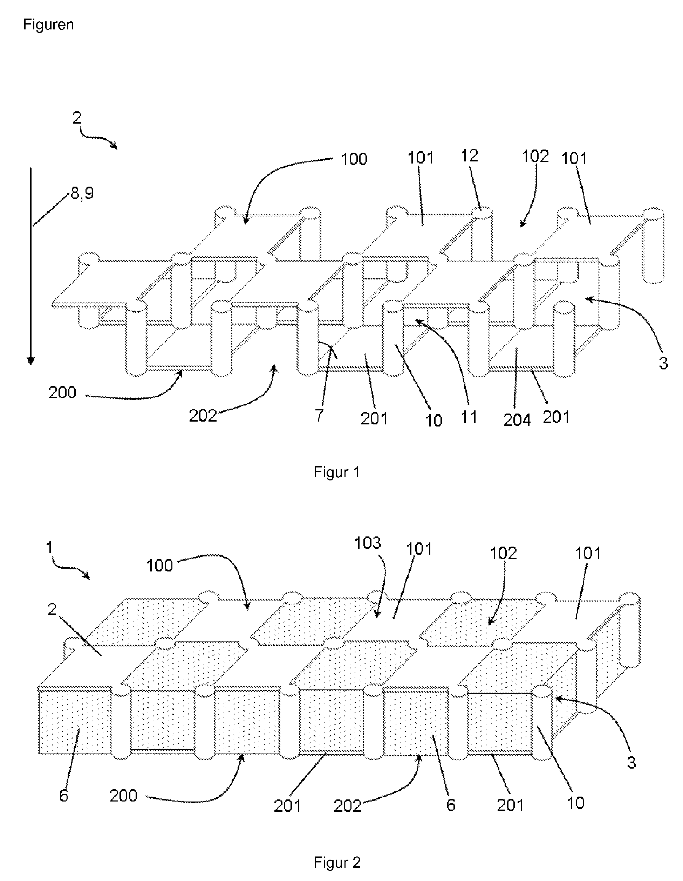

Figur 1 zeigt eine perspektivische Teilansicht eines Trägers 2 eines erfindungsgemäßen Strukturbauteils aus einem Polyamid. Der Träger 2 beinhaltet zwei parallel zueinander angeordneten Trägerebenen 100, 201, welche derart beabstandet voneinander angeordnet sind, dass zwischen einer ersten Trägerebene 100 und einer zweiten Trägerebene 200 ein Zwischenraum 3 gebildet wird. Die Trägerebenen 100, 200 bestehen jeweils aus einer Vielzahl von miteinander verbundenen Flächenelementen 101, 201, die wiederum jeweils durch Freiräume 102, 202 voneinander getrennt sind. Die Flächenelemente 101 der ersten Trägerebene 100 sind über Stege 10 mit den Flächenelementen 201 der zweiten Trägerebene 200 verbunden. Dabei erstrecken sich die Stege 10 von der ersten Trägerebene 100 durch den Zwischenraum 3 zur zweiten Trägerebene 200. Zwischen zwei benachbarten, sich durch den Zwischenraum 3 erstreckende Stegen 10 werden dabei Gänge 11 gebildet. Der Zwischenraum 3 des abgebildeten Trägers 2 ist zur Aufnahme eines nicht dargestellten Strukturmaterials vorgesehen, welches den Zwischenraum 3 zumindest bereichsweise ausfüllt und welche sich durch die Gänge 11 zwischen den Stegen 10 im Zwischenraum 3 erstreckt. Im gezeigten Ausführungsbeispiel wird das Strukturmaterial derart vorgesehen, dass es in den Bereichen der Freiräume 102, 202 die äußere Oberfläche des Strukturbauteils 1 bildet.

Im gezeigten Ausführungsbeispiel kommen im Wesentlichen quadratische Flächenelemente 101, 201 zum Einsatz, wobei die Flächenelemente 101, 201 und die benachbarten Freiräume 102, 202 derart vorgesehen sind, dass die erste Trägerebene 100 und die zweite Trägerebene 200 jeweils eine Gitterstruktur, genauer eine schachbrettartige Form aufweisen. Die Flächenelemente 101, 201 sind dabei mit jeweils benachbarten Flächenelementen 101, 201 derselben Trägerebene 100, 200 über die Endbereiche der Stege 10, die Stirnbereiche 12, an ihren Ecken miteinander verbunden. Die Stege 12 liegen in den Trägerebenen 100, 200 und bilden im gezeigten Ausführungsbeispiel teilweise die äußere Oberfläche des Trägers 2.

Die Stege 10 sind derart gestaltet und angeordnet, dass der Winkel 7 zwischen einer dem Zwischenraum 3 zugewandten Innenfläche 204 der Flächenelemente 201 und mit dem jeweiligen Flächenelement 201 verbundenen Steg 10 größer als 90° ist. Hierfür können sich die Stege 10 insbesondere schräg durch den Zwischenraum 3 erstrecken oder beispielsweise trapezförmig gestaltet sein. Gleiches gilt für die Flächenelemente 101 der ersten Trägerebene 100, deren Innenfläche in der gezeigten Darstellung verdeckt ist.

Im gezeigten Ausführungsbeispiel sind die schachbrettartig gestalteten Trägerebenen 100, 200 versetzt zueinander angeordnet, so dass jeweils ein Flächenelement 101, 201 der einen Trägerebene 100, 200 in einer Projektionsrichtung 14 oder umgekehrt gegenüberliegend von einem Freiraum 202, 102 der jeweils anderen Trägerebene 200, 100 angeordnet ist. Dabei sind die Flächenelemente 101, 201 derart gestaltet, dass die Flächengröße dieser Trägerelemente 101, 201 kleiner ist als die Flächengröße des jeweils gegenüberliegenden Freiraums 202, 102. Es hat sich herausgestellt, dass eine Flächengröße eines Flächenelementes 101, 201 im Bereich von 10% - 99% der Flächengröße des gegenüberliegenden Freiraums 202, 102 der gegenüberliegenden Trägerebene 200, 100 für eine einfache Herstellung des Trägers 2 von Vorteil ist. Im vorliegenden Ausführungsbeispiel kommen Flächenelemente 101, 201 mit einer ungefähren Flächengröße von 80% der Flächengröße der gegenüberliegenden Freiräume 202, 102 zum Einsatz.

Figur 2 zeigt eine perspektivische Teilansicht eines erfindungsgemäßen Strukturbauteils 1, bestehend aus dem in Figur 1 gezeigten Träger 2 und einem Strukturmaterial 6, welches im Zwischenraum 3 zwischen den Trägerebenen 100, 200 vorgesehen ist und welches sich durch die in Figur 1 gezeigten Gänge zwischen den Stegen 10 im Zwischenraum 3 erstreckt. Dabei bildet das Strukturmaterial 6 bereichsweise die äußere Oberfläche des Strukturbauteils 1, in dem es insbesondere in den Freiräumen 102, 202 der Trägerebene 100, 200 vorgesehen ist und dort in einer Ebene mit Außenflächen 103, 203 der Flächenelemente 101, 201 liegt.

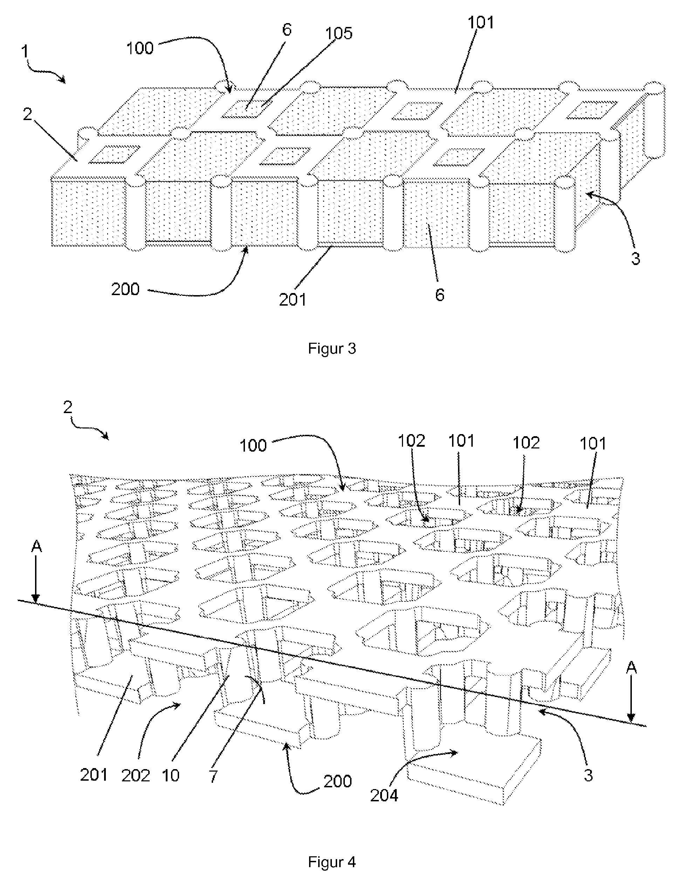

Figur 3 zeigt eine perspektivische Teilansicht eines alternativen Strukturbauteils 1. Der prinzipielle Aufbau des gezeigten Strukturbauteils 1 entspricht dem Strukturbauteil 1 in Figur 2 mit dem Träger aus Figur 1. Zusätzlich sind die Flächenelemente 101 der ersten Trägerebene 100 mit Ausnehmungen 105 ausgestattet und sind demnach rahmenförmig ausgebildet. Das im Zwischenraum 3 vorgesehene Strukturmaterial 6 ist im gezeigten Ausführungsbeispiel im Bereich der Ausnehmungen 105 vorgesehen, und bildet insbesondere an diesen Bereichen die äußere Oberfläche des Strukturbauteils 1.

Figur 4 zeigt eine perspektivische Teilansicht eines alternativen Trägers 2 zum Einsatz in einem erfindungsgemäßen Strukturbauteil. Der dargestellte Träger 2 besteht auch hier aus zwei im Wesentlichen parallel zueinander angeordneten Trägerebenen 100, 200, welche eine Vielzahl von Flächenelementen 101, 201 aufweisen, die über Stege 10 miteinander verbunden sind. Auch hier findet sich ein Zwischenraum 3 zwischen den beabstandet zueinander angeordneten Trägerebene 100, 200 zur Aufnahme eines nicht gezeigten Strukturmaterials. Die Trägerebenen 100, 200 weisen jeweils eine Gitterstruktur auf, wobei die Trägerebenen 100, 200 derart versetzt zueinander angeordnet sind, dass die Gitterstruktur wechselt. Dabei sind auch hier die Flächenelemente 101, 201 im Wesentlichen quadratisch gestaltet. Ferner sind die Flächenelemente 101, 201 einer Trägerebene 100, 200 jeweils von benachbarten Flächenelementen 101, 201 durch Freiräume 102, 202 getrennt. Die Verbindung der Flächenelemente 101, 201 einer Trägerebene 100, 200 erfolgt diagonal an den Ecken der Flächenelemente 101, 201 an deren Kanten über die Stirnbereiche 12 der Stege 10. Zur Verbindung der Flächenelemente 101 der ersten Trägerebene 100 mit den Flächenelementen 102 der zweiten Trägerebene 200 sind zudem weitere Stege 10 an den Kanten der quadratischen Flächenelemente 101, 201 vorgesehen.

Auch hier sind die Trägerebenen 100, 200 versetzt zueinander angeordnet, so dass die ersten Flächenelemente 101 gegenüberliegend von den Freiräumen 202 der gegenüberliegenden zweiten Trägerebene 200 angeordnet sind und umgekehrt. Der Träger 2 ist aus einem Kunststoffmaterial gefertigt und wird in einem Spritzgussverfahren hergestellt. Zur einfachen und kostengünstigen Herstellung sind die Flächenelemente 101, 201 kleiner als die gegenüberliegenden Freiräume 202, 102. Zudem sind die Winkel 7 zwischen den Stegen 10 und den Innenflächen 204 der mit den Stegen 10 verbundenen Flächenelementen 201 größer als 90°. Dies gilt auch hier für die Winkel 7 zwischen den verdeckten Innenflächen der ersten Flächenelemente 101 und der Stege 10. Durch eine derartige Gestaltung des Trägers 2 können Hinterschnitte vermieden werden, so dass eine besonders einfache Entformbarkeit des Trägers 2 nach der Herstellung insbesondere mittels eines Spritzgussverfahrens ermöglicht wird.

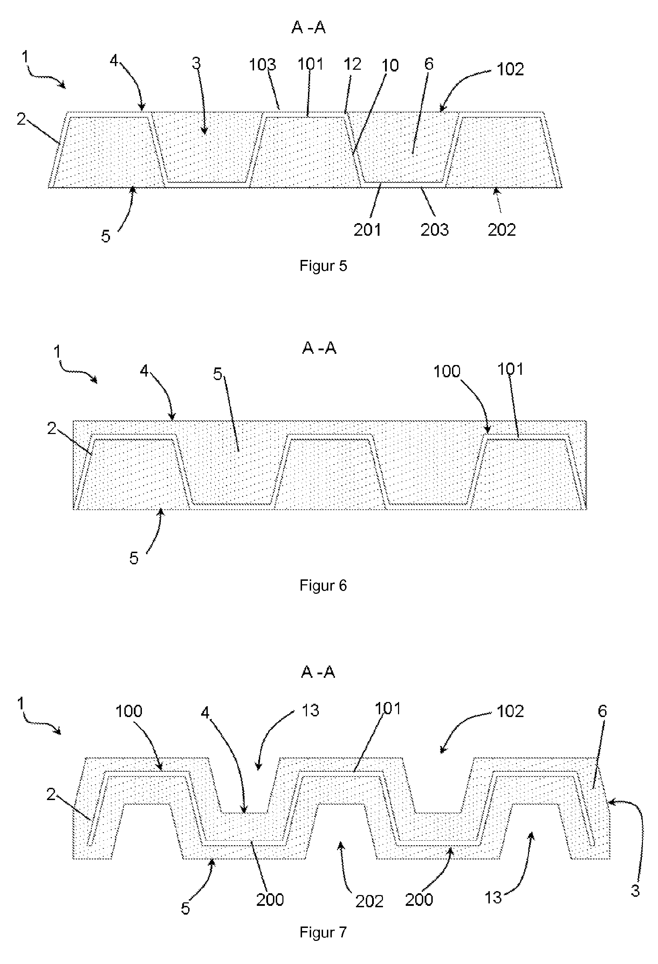

Figur 5 zeigt eine geschnittene Teilansicht durch die Schnittlinie A-A des Trägers 2 aus Figur 4, wobei insbesondere im Zwischenraum 3 das Strukturmaterial 6 vorgesehen ist und sich auch durch die nicht gezeigten Gänge zwischen den Stegen 10 erstreckt. Das Strukturmaterial 6 bildet bereichsweise die äußere Oberfläche des Strukturbauteils 1 insbesondere im Bereich der Freiräume 102, 202 zwischen den Flächenelementen 101, 201. So wird eine obere Außenfläche 4 des Strukturbauteils durch die die Außenfläche 103 der ersten Flächenelemente 101 und dem in den Zwischenräumen 102 vorgesehen Strukturmaterial 6 gebildet sowie bereichsweise durch die Stirnbereiche 12 der Stege 10. Ferner wird eine untere Außenfläche 5 des Strukturbauteils 1 entsprechend durch die Außenflächen 203 der Flächenelemente 201 und dem in den Freiräumen 202 vorgesehenen Strukturmaterial 6 sowie den Stirnbereichen 12 der Stege 10 gebildet. Alternativ hierzu können die Stirnbereiche 12 der Stege 10 in den Außenflächen 103, 203 der Flächenelemente 101, 201 münden, so dass die Außenflächen 4, 5 des Strukturbauteils 1 lediglich durch die Außenflächen 103, 203 der Flächenelemente 201, 202 und das in den Freiräumen 102, 202 vorgesehene Strukturmaterial 6 gebildet wird.

Figur 6 zeigt eine geschnittene Teilansicht eines alternativen Strukturbauteils 1 im Hinblick auf die Teilansicht aus Figur 5. Der abgebildete Träger 2 des Strukturbauteils 1 ist derart mit einem Strukturmaterial versehen, dass die Flächenelemente 101 der ersten Trägerebene 100 vollständig von dem Strukturmaterial 6 eingehüllt werden. Die obere Außenfläche 4 des Strukturbauteils 1 wird somit ausschließlich durch das Strukturmaterial 6 gebildet. Die Bereitstellung der unteren Außenfläche 5 des Strukturbauteils 1 erfolgt wie im Figur 5 gezeigten Ausführungsbeispiel.

Figur 7 zeigt eine geschnittene Seitenansicht eines alternativen Strukturbauteils 1 im Hinblick auf die Strukturbauteile, welche mit Figuren 5 und 6 gezeigt werden. Im gezeigten Ausführungsbeispiel hüllt das Strukturmaterial 6 die Flächenelemente 101, 201 beider Trägerebenen 100, 200 vollständig ein. Insbesondere kann hierdurch ein Schutz des Trägers 2 ermöglicht werden, da selbiger durch das Strukturbauteil 6 vor äußeren Einflüssen geschützt ist. Ferner ist der Zwischenraum, welcher sich von der ersten Trägerebene 100 zur zweiten Trägerebene 200 erstreckt im Bereich der Flächenelemente 101, 201 nur bereichsweise mit Strukturmaterial ausgefüllt. Im Bereich der Freiräume 102, 202 sind im Strukturmaterial topfförmige hinsichtlich der oberen Außenfläche 4 und der unteren Außenfläche 5 jeweils offene Hohlbereiche vorgesehen, in den kein Strukturmaterial 6 vorgesehen ist.

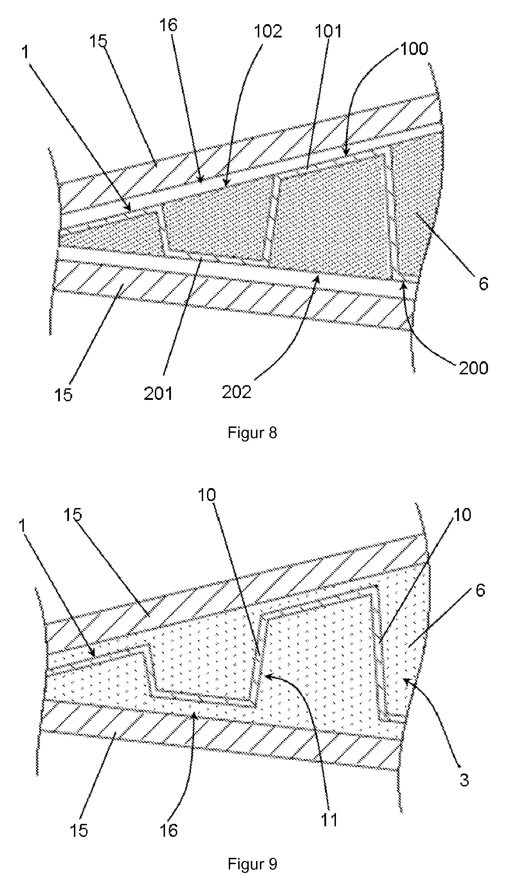

Figur 8 zeigt eine geschnittene Seitenansicht eines erfindungsgemäßen Strukturbauteils 1, welches in einen von zwei Blechflächen 14, 15 begrenzten Hohlraum 16 vorgesehen ist. Bei diesem gezeigten Strukturbauteil 1 kommt ein Träger 2 zum Einsatz, bei dem die Trägerebenen 100, 200 nicht parallel zueinander angeordnet sind. Vielmehr sind die Trägerebenen 100, 200 hinsichtlich der Erstreckung der Blechflächen 14, 15 ausgerichtet und verlaufen jeweils parallel zur benachbarten Blechfläche 14, 15. Die obere Außenfläche 4 und die untere Außenfläche 5 wird jeweils sowohl durch die Flächenelemente 101, 201 und durch das in den Freiraum 102, 202 vorgesehene Strukturmaterial 6 gebildet.

Figur 9 zeigt die Baugruppe aus Figur 8, wobei das Strukturmaterial 6 expandiert worden ist. Das expandierte Strukturmaterial 6 kommt dabei in Kontakt mit dem den Hohlraum 16 zugewandten Flächenbereichen der Blechflächen 14, 15 und füllt den Hohlraum 16 im gezeigten Ausführungsbeispiel vollständig aus. Da sich das Strukturmaterial 6 im Zwischenraum 3 auch durch die Gänge 11 zwischen den Stegen 10 erstreckt, kann eine durchgehende Verbindung zwischen den beiden Blechflächen 14, 15 durch das Strukturmaterial 6 bereitgestellt werden, so dass insbesondere einwirkende Kräfte, Vibrationen und/oder Schwingungen aufgenommen und/oder von der einen Blechfläche 14 auf die gegenüberliegende Blechfläche 15 durch das Strukturmaterial 6 übertragen werden können.

**Bezugszeichenliste**

| | | | |
|---|---|---|---|
| 1 | Strukturbauteil | 15 | Zweite Blechfläche |
| 2 | Träger | 16 | Hohlraum |
| 3 | Zwischenraum | 100 | Erste Trägerebene |
| 4 | Obere Außenfläche | 101 | Erste Flächenelemente |
| 5 | Untere Außenfläche | 102 | Erste Freiräume |
| 6 | Strukturmaterial | 103 | Außenfläche |
| 7 | Winkel | 104 | Innenfläche |
| 8 | Entformungsrichtung | 105 | Ausnehmung |
| 9 | Projektionsrichtung | 200 | Zweite Trägerebene |
| 10 | Steg | 201 | Zweite Flächenelemente |
| 11 | Gang | 202 | Zweite Freiräume |
| 12 | Stirnbereich | 203 | Außenfläche |
| 13 | Hohlbereich | 204 | Innenfläche |
| 14 | Erste Blechfläche | | |

## Patentansprüche

1. Strukturbauteil (1) aufweisend einen Träger (2) aus zumindest zwei Trägerebenen (100, 200), die derart beabstandet voneinander angeordnet sind, dass zwischen einer ersten Trägerebene (100) und einer der ersten Trägerebene (100) gegenüberliegenden zweiten Trägerebene (200) ein Zwischenraum (3) gebildet wird, wobei die Trägerebenen (100, 200) eine Vielzahl von miteinander verbundenen Flächenelementen (101, 201) aufweisen, die jeweils durch Freiräume (102, 202) zumindest bereichsweise voneinander getrennt sind, wobei die Flächenelemente (101) der ersten Trägerebene (100) über Stege (10) mit Flächenelementen (201) der zweiten Trägerebene (200) derart verbunden sind, dass jeweils zwischen benachbarten Stegen (10) Gänge (11) gebildet werden und wobei im Zwischenraum (3) zwischen den Trägerebenen (100, 200) zumindest bereichsweise ein Strukturmaterial (6) vorgesehen ist, welches sich durch die Gänge (11) zwischen den Stegen (10) im Zwischenraum (3) erstreckt und, **dadurch gekennzeichnet, dass** das Strukturmaterial (6) zumindest bereichsweise die äußere Oberfläche (4, 5) des Strukturbauteils (1) bildet.

2. Strukturbauteil (1) nach Anspruch 1, **dadurch gekennzeichnet, dass** der Winkel (7) zwischen einem Flächenelement (101, 201) und einem mit dem Flächenelement (101, 201) verbundenen Steg (10) größer als 90° ist.

3. Strukturbauteil (1) nach einem der vorhergehenden Ansprüche, **dadurch gekennzeichnet, dass** die Flächenelemente (101, 201) rahmenförmig ausgebildet sind und Ausnehmungen (105) aufweisen.

4. Strukturbauteil (1) nach einem der vorhergehenden Ansprüche, **dadurch gekennzeichnet, dass** eine Seite des Strukturbauteils (1) durch eine Trägerebene (100, 200) gebildet wird, wobei der Anteil der durch die Flächenelemente (101, 201) dieser Trägerebene (100, 200) gebildeten Oberfläche dieser Trägerebene (100, 200) kleiner als 50% der Oberfläche dieser Trägerebene (100, 200) ist.

5. Strukturbauteil (1) nach einem der vorhergehenden Ansprüche, **dadurch gekennzeichnet, dass** jeweils ein Flächenelement (101, 201) der einen Trägerebene (100, 200) in einer Projektionsrichtung (9) gegenüberliegend von einem Freiraum (202, 102) der jeweils anderen Trägerebene (200, 100) angeordnet ist.

6. Strukturbauteil (1) nach Anspruch 5, **dadurch gekennzeichnet, dass** die Flächengröße eines Trägerelementes (101, 201) kleiner als die Flächengröße des gegenüberliegenden Freiraums (202, 102) ist.

7. Strukturbauteil (1) nach Anspruch 6, **dadurch gekennzeichnet, dass** die Flächengröße eines Flächenelementes (101, 201) der einen Trägerebene (100, 200) im Bereich von 10% - 99% der Flächengröße des entsprechenden Freiraums (202, 102) der gegenüberliegenden Trägerebene (100, 200) beträgt.

8. Strukturbauteil (1) nach Anspruch 5 bis 7, **dadurch gekennzeichnet, dass** die zu einer Trägerebene (100, 200) zeigende Oberfläche der Flächenelemente (101, 201) der ersten und der zweiten Trägerebene (100, 200) kleiner als oder gleich 99% der Gesamtoberfläche dieser Trägerebene (100, 200) ist.

9. Strukturbauteil (1) nach einem der vorhergehenden Ansprüche, **dadurch gekennzeichnet, dass** die äußere Oberfläche (4, 5) des Strukturbauteils (1) zumindest teilweise durch die äußere Oberfläche (103, 203) der Flächenelemente (101, 201) und durch das in den Freiräumen (102, 202) vorgesehene Strukturmaterial (6) gebildet wird.

10. Strukturbauteil (1) nach einem der vorhergehenden Ansprüche, **dadurch gekennzeichnet, dass** das Strukturmaterial (6) die Flächenelemente (101, 201) zumindest einer Trägerebene (100, 200) vollständig einhüllt.

## Claims

1. A structural component (1) comprising a substrate (2) consisting of at least two substrate planes (100, 200) that are spaced apart from one another such that an intermediate space (3) is formed between a first substrate plane (100) and a second substrate plane (200) which is opposite the first substrate plane (100), the substrate planes (100, 200) having a plurality of interconnected planar elements (101, 201) that are each separated from one another by open spaces (102, 202), at least in regions, the planar elements (101) of the first substrate plane (100) being connected to planar elements (201) of the second substrate plane (200) by means of connecting pieces (10) in such a way that passages (11) are formed in each case between adjacent connecting pieces (10), a structural material (6) being provided in the intermediate space (3) between the substrate planes (100, 200), at least in regions, and extending through the passages (11) between the connecting pieces (10) in the intermediate space (3), **characterized in that** the structural material (6) forms the outer surface (4, 5) of the structural component (1), at least in regions.

2. The structural component (1) according to claim 1, **characterized in that** the angle (7) between a planar element (101, 201) and a connecting piece (10) connected to the planar element (101, 201) is greater than 90°.

3. The structural component (1) according to one of the preceding claims, **characterized in that** the planar elements (101, 201) are frame-like and have recesses (105).

4. The structural component (1) according to one of the preceding claims, **characterized in that** one side of the structural component (1) is formed by a substrate plane (100, 200), the proportion of the surface of said substrate plane (100, 200) formed by the planar elements (101, 201) of said substrate plane (100, 200) being less than 50% of the surface of said substrate plane (100, 200).

5. The structural component (1) according to one of the preceding claims, **characterized in that** a planar element (101, 201) of one substrate plane (100, 200), respectively, is arranged in a projection direction (9) opposite an open space (202, 102) of the other substrate plane (200, 100), respectively.

6. The structural component (1) according to claim 5, **characterized in that** the area size of a substrate element (101, 201) is smaller than the area size of the opposite open space (202, 102).

7. The structural component (1) according to claim 6, **characterized in that** the surface area of a planar element (101, 201) of one substrate plane (100, 200) is in the range of 10% - 99% of the surface area of the corresponding open space (202, 102) of the opposite substrate plane (100, 200).

8. The structural component (1) according to claims 5 to 7, **characterized in that** the surface of the planar elements (101, 201) of the first and the second substrate plane (100, 200) pointing towards a substrate plane (100, 200) is smaller than or equal to 99% of the total surface of said substrate plane (100, 200).

9. The structural component (1) according to one of the preceding claims, **characterized in that** the outer surface (4, 5) of the structural component (1) is formed, at least in part, by the outer surface (103, 203) of the planar elements (101, 201) and by the structural material (6) provided in the open spaces (102, 202).

10. The structural component (1) according to one of the preceding claims, **characterized in that** the structural material (6) completely covers the planar elements (101, 201) at least of one substrate plane (100, 200).

## Revendications

1. Composant structurel (1) comprenant un support (2) constitué d'au moins deux niveaux de support (100, 200) qui sont espacés l'un de l'autres de telle sorte qu'un espace intermédiaire (3) est ménagé entre un premier niveau de support (100) et un second niveau de support (200), opposé au premier niveau de support (100), les niveaux de support (100, 200) comprenant une pluralité d'éléments de surface (101, 201) reliés entre eux qui sont séparés les uns des autres par des espaces libres (102, 202) au par endroits, les éléments de surface (101) du premier plan de support (100) sont reliés aux éléments de surface (201) du second niveau de support (200) par des nervures (10) de telle sorte que des passages (11) sont ménagés entre des nervures adjacentes (10) et dans l'espace intermédiaire (3), entre les niveaux de support (100, 200), sont prévus au moins par endroits une matière structurelle (6) qui s'étend dans l'espace intermédiaire (3) à travers les passages (11) entre les nervures (10) et, **caractérisé en ce que** la matière structurelle (6) forme au moins par endroits la surface extérieure (4, 5) du composant structurel (1).

2. Composant structurel (1) selon la revendication 1, **caractérisé en ce que** l'angle (7) formé entre un élément de surface (101, 201) et une nervure (10), reliée à l'élément de surface (101, 201), est supérieur à 90°.

3. Composant structurelle (1) selon l'une des revendications précédentes, **caractérisé en ce que** les éléments de surface (101, 201) sont configurés en cadre et comportent des évidements (105).

4. Composant structurel (1) selon l'une des revendications précédentes, **caractérisé en ce qu'**un côté du composant structurel (1) est formé par un niveau de support (100, 200), la proportion la surface de ce niveau de support (100, 200), formée par les éléments de surface (101, 201) de ce niveau de support (100, 200), est inférieure à 50% de la surface de ce niveau de support (100, 200).

5. Composant structurel (1) selon l'une des revendications précédentes, **caractérisé en ce qu'**un élément de surface (101, 201) de l'un des niveaux de support (100, 200) est disposé dans une direction de projection (9) opposée à un espace libre (202, 102) de l'autre niveau de support (200, 100).

6. Composant structurel (1) selon la revendication 5, **caractérisé en ce que** l'aire d'un élément de support (101, 201) est inférieur à l'aire de l'espace libre (202, 102) opposé.

7. Composant structurel (1) selon la revendication 6, **caractérisé en ce que** l'aire d'un élément de surface (101, 201) de l'un des niveaux de support (100, 200) dans la gamme de 10% à 99% de l'aire de l'espace libre (202, 102) correspondant du niveau de support (100, 200) opposé.

8. Composant structurel (1) selon l'une des revendications 5 à 7, **caractérisé en ce que** la surface, dirigée vers un niveau de support (100, 200), des éléments de surface (101, 201) des premier et second niveaux de support (100, 200) est inférieure ou égale à 99% de la surface totale de ce niveau de support (100, 200).

9. Composant structurel (1) selon l'une des revendications précédentes, **caractérisé en ce que** la surface extérieure (4, 5) du composant structurel (1) est formée au moins partiellement par la surface extérieure (103, 203) de l'élément de surface (101, 201) et par la matière structurelle (6) prévue dans les espaces libres (102, 202).

10. Composant structurel (1) selon l'une des revendications précédentes, **caractérisé en ce que** la matière structurelle (6) enveloppe complètement les éléments de surface (101, 201) au moins un niveau de support (100, 200).
